# EUROPÄISCHE PATENTSCHRIFT

(11) **EP 2 453 072 B1**
(45) Veröffentlichungstag und Bekanntmachung des Hinweises auf die Patenterteilung: **11.01.2017**
(21) Anmeldenummer: 11188910.1
(22) Anmeldetag: 11.11.2011
(51) Int. Cl.: E04D 15/04, B29C 65/10, B29C 65/12, B29C 65/00

(54) **Vorrichtung und Verfahren zum Verschweißen einer auf einem Untergrund ausgerollten Bitumenbahn**
Method and device for welding a bitumen membrane rolled out on a base
Dispositif et procédé de soudage d'une bande de bitume déroulée sur un support

(30) Priorität: 12.11.2010 DE 102010060540; 04.03.2011 DE 102011001111
(43) Veröffentlichungstag der Anmeldung: 16.05.2012
(73) Patentinhaber: Sporer, Jürgen, 86920 Denklingen (DE)
(72) Erfinder: Sporer, Jürgen, 86920 Denklingen (DE)
(74) Vertreter: Kotitschke & Heurung Partnerschaft mbB

(56) Entgegenhaltungen:
- WO-A1-96/13383
- CH-A5- 694 088
- DE-A1- 1 652 399
- DE-U1- 8 331 043
- US-A- 4 239 581
- US-A- 4 259 142
- US-A- 5 552 014

## Beschreibung

Die vorliegende Erfindung betrifft eine Vorrichtung und ein Verfahren zum Verschweißen einer auf einem Untergrund ausgerollten Bitumenbahn, wobei die Bitumenbahn im Wesentlichen über ihre gesamte Breite mit dem Untergrund verschweißt wird.

Bitumenbahnen werden beispielsweise als Dachabdichtung zum Schutz vor dem Eindringen von Wasser in ein Gebäude verwendet. Dabei werden die einzelnen Bitumenbahnen mit dem Untergrund, welcher aus einer bereits verlegten Lage Bitumenbahnen, aus anderen verschiedenen Tragkonstruktionen des Dachs oder einer Mischung daraus bestehen kann, verschweißt. Insbesondere werden die Bitumenbahnen überlappend verlegt, um das Eindringen von Wasser in Zwischenräume zwischen einzelnen Bitumenbahnen zu verhindern.

Bei einem bekannten Verfahren werden die üblicherweise in Rollen gelieferten Bitumenbahnen zunächst auf dem abzudichtenden Untergrund ausgerollt, ausgerichtet und danach wieder aufgerollt. Anschließend werden ein aufgerollter Abschnitt der Bitumenbahn und ein der Größe nach entsprechender Abschnitt des Untergrunds mittels eines mit Gas betriebenen Handbrenners erhitzt. Erst wenn beide Abschnitte hinreichend erhitzt worden sind, wird die aufgerollte Bitumenbahn beispielsweise mit dem Fuß teilweise abgerollt und auf dem Untergrund festgetreten. Dieser Schritt wird so lange wiederholt, bis die gesamte Bitumenbahn abgerollt und mit dem Untergrund verschweißt ist.

Dieses Verfahren ist sehr arbeits- und zeitintensiv, da der Dachdecker fortwährend den Gasbrenner in der Hand halten, die aufgerollte Bitumenbahn mit dem Fuß abrollen und an den Untergrund festdrücken muss. Sind die abzudichtenden Flächen sehr groß, kann dies sehr schnell zu Ermüdungserscheinungen führen. Weiterhin können unverschweißte Stellen zwischen der Bitumenbahn und dem Untergrund auftreten, wenn die Bitumenbahn bzw. der Untergrund mittels des Brenners nicht ausreichend oder ungleichmäßig erwärmt wurden. Dies kann zu undichten Stellen führen, die später nur unter sehr großem Aufwand aufgespürt werden können.

Ferner ist ein Aufschweißverlegegerät zur Verlegung von Dichtungsbahnen bekannt, welches einen kugelgelagerten Walzenkern aufweist, der in eine aufgerollte Dichtungsbahn eingesteckt wird. Das Aufschweißverlegegerät weist einen Breitbandbrenner mit mehreren Brennsegmenten auf, welche die Dichtungsbahn gleichmäßig mit Wärme beaufschlagen. Beim Verlegen der Dichtungsbahn wird ein Abschnitt der aufgerollten Dichtungsbahn mittels des Breitbandbrenners erhitzt und durch die Bewegung des Aufschweißverlegegeräts die aufgerollte Dichtungsbahn sukzessive abgerollt, wobei der Walzenkern durch sein Eigengewicht die Dichtungsbahn an den Untergrund anpresst.

Auch bei Verwendung des bekannten Aufschweißverlegegeräts wird üblicherweise zuerst die Dichtungsbahn von Hand ausgerollt und ausgerichtet, danach wieder zusammengerollt und in das Aufschweißverlegegerät eingesetzt.

Eine Vorrichtung zum Verschweißen ausgerollter Bitumenbahnen ist beispielsweise aus dem Dokument CH 694088 A5 bekannt.

Bei dieser Vorrichtung wird ein Heizkeil unter eine ausgelegte Bitumenbahn eingeführt und sowohl die Unterseite der Bitumenbahn als auch der Untergrund für die Verschweißung erhitzt. Der Heizkeil ist als Hohlkörper ausgebildet, in den Heissgas, das über einen Heißgasgenerator erhitzt wurde, eingeblasen wird. In dem Heizkeil sind Austrittsöffnungen gebildet, durch die das Heissgas zur Erwärmung der Bitumenbahn bzw. des Untergrundes austritt.

Der Heizkeil ist zwischen einer vorderen und hinteren Rolle der Vorrichtung angeordnet, wobei die hintere Rolle neben der Funktion als Fahrwerk auch die Funktion der Anpressrolle übernimmt.

Während des Betriebes der Vorrichtung rollt die Vorrichtung mit ihrer vorderen Rolle über die ausgelegte unverschweißte Bitumenbahn. Die unverschweißte Bitumenbahn wird in Fahrtrichtung hinter der ersten Rolle durch den Heizkeil angehoben und erwärmt. Die Anpressrolle presst anschließend die erwärmte Bitumenbahn auf den Untergrund.

Nachteil dieser aus dem Stand der Technik bekannten Vorrichtung ist, dass der Anfangsbereich einer Bitumenbahn mit der Vorrichtung nicht verschweißt werden kann, da der Anfangs- bzw. Kopfbereich einer in die Vorrichtung neu eingelegten Bitumenbahn, der sich von dem Heizkeil bis zu der Anpressrolle erstreckt, nicht erwärmt werden kann.

Dies hat zur Folge, dass Bitumenbahnen, die in Längsrichtung hintereinander angeordnet sind und miteinander verschweißt werden sollen, vorab mit einem Handbrenner verbunden werden müssen.

Ein weiterer Nachteil der bekannten Vorrichtung ist, dass das Verschweißen der Bitumenbahn nicht an einer Dachkante oder Dachaufbauten begonnen werden kann. Diese Einschränkung resultiert daraus, dass der Heizkeil auf Grund der Anordnung der Anpressrolle nicht bis an die Dachkante herangeführt werden kann. Die Bitumenbahn muss im Bereich einer Dachkante mühsam von Hand verschweißt werden.

Weiterhin nachteilig ist bei der Vorrichtung, dass der Verschweißvorgang nicht beliebig unterbrochen werden kann.

Die Bitumenbahn läuft bei der bekannten Vorrichtung, wie oben erläutert, über den Heizkeil und liegt auf diesem auf. Wenn die Vorrichtung während eines Verschweißvorganges angehalten wird und der Heizkeil sich noch unter der zu verschweißenden Bitumenbahn befindet, liegt die Bitumenbahn unmittelbar auf dem erhitzten Heizkeil auf, so dass es zu Beschädigungen der Bitumenbahn kommen kann.

Eine weitere Vorrichtung zum vollflächigen Verschweißen einer Bitumenbahn auf einem Untergrund ist aus DE 1 652 399 A1 bekannt.

Es ist eine Aufgabe der Erfindung, eine Vorrichtung und ein Verfahren bereitzustellen, mit denen das Verschweißen einer Bitumenbahn auf einem Untergrund sehr viel einfacher und schneller erfolgen kann.

Diese Aufgabe wird einerseits gelöst durch eine Vorrichtung gemäß Patentanspruch 1.

Da die Vorrichtung ein in Längsrichtung der Bitumenbahn bewegbares Hebeelement aufweist, können sukzessive Längsabschnitte der Bitumenbahn vorübergehend angehoben werden, wodurch es möglich ist, die dem Untergrund zugewandte Unterseite der Bitumenbahn mit dem direkt auf die Unterseite wirkenden Brenner aufzuschmelzen. Daher kann eine bereits ausgerollte und ausgerichtete Bitumenbahn direkt mit dem Untergrund verschweißt werden, ohne dass die Bitumenbahn zuvor wieder aufgerollt werden muss. Insbesondere bei großen Flächen stellt dies eine erhebliche Zeitersparnis gegenüber dem herkömmlichen Verfahren dar, was auch eine erhebliche Kostenreduktion nach sich zieht. Eine mögliche Verbrennungsgefahr des Dachdeckers durch direkten Kontakt mit dem Brenner wird auch minimiert. Weiterhin wird dadurch, dass das Aufschmelzen der Unterseite der Bitumenbahn mehr oder weniger in einem geschlossen Raum stattfindet, der Energieverbrauch des Brenners reduziert, denn im Gegensatz zu dem herkömmlichen Verfahren wird auch die nach oben abgestrahlte Wärme genutzt. Falls zusätzlich seitlich der Brennereinrichtung Windschutzbleche vorgesehen sind, kann der Energieverbrauch weiter reduziert werden. Außerdem kann durch Abstellen des Brenners die direkte Erhitzung der Bitumenbahn unmittelbar unterbunden werden. Aus diesem Grund ist auch eine zeitweise Unterbrechung der Verschweißung bzw. ein Anhalten der Vorrichtung unkritisch.

Mittels der Anpressrolle kann der aufgeschmolzene Längsabschnitt der Bitumenbahn bevorzugt vollflächig auf den Untergrund gepresst werden, wodurch die gesamte Bitumenbahnenbreite homogen mit dem Untergrund verschweißt wird. Es kann eine einzelne Anpressrolle vorgesehen sein, die ein sehr hohes Eigengewicht aufweisen kann und deren in Querrichtung der Vorrichtung gemessene Breite gleich oder größer als die Breite der zu verlegenden Bitumenbahn ist. Bevorzugt ist die Anpresswalze derart gelagert, dass Unebenheiten des Untergrunds ausgeglichen werden können, um eine gleichmäßige Druckverteilung zu erreichen. Es können aber auch mehrere einzelne Anpressrollen vorgesehen sein, welche getrennt auf einer Anpressrollenachse gelagert sind, um den Druck auf einem unebenen Untergrund angleichen zu können.

Das Hebeelement weist eine Rampe, d.h. eine geneigte Fläche oder Ebene bzw. ansteigende Fläche oder Ebene, auf, auf der beim bestimmungsgemäßen Gebrauch die Unterseite der Bitumenbahn entlang gleitet und die ausgehend von einer bei bestimmungsgemäßem Gebrauch in Bewegungsrichtung der Vorrichtung weisenden Seite des Hebeelementes ansteigt.

Weiterhin kann die Vorrichtung ein Bedienfeld umfassen, an dem die Art der Bitumenbahn aus einer Vielzahl von Bitumenbahnarten manuell ausgewählt werden kann. Abhängig von der Art der Bitumenbahn stellt die Vorrichtung automatisch die Geschwindigkeit, mit der die Antriebsrolle bzw. die Antriebsrollen angetrieben werden, und die Temperatur bzw. Leistung der Brennereinrichtung ein.

Des Weiteren kommt die Erfindung bei einem Verfahren gemäß Patentanspruch 5 zum Einsatz. Die Bitumenbahn kann hierbei beispielsweise bereits vollständig oder bei Bedarf lediglich teilweise auf dem Untergrund ausgerollt sein. Von Bedeutung ist, dass der Schweißvorgang immer nur an der ausgerollten Bitumenbahn erfolgt. Vorteilhaft ist, dass dieses Verfahren im Vergleich zum herkömmlichen Verfahren sehr schnell und dadurch kostengünstig durchgeführt werden kann. Ebenso wird dadurch, dass die Unterseite der angehobenen Längsabschnitte der Bitumenbahn aufgeschmolzen wird, nahezu die gesamte Brennerenergie für das Verschweißen der Bitumenbahn mit dem Untergrund genutzt.

Dieses Verfahren, welches mit der erfindungsgemäßen Vorrichtung ausgeführt werden kann, hat gegenüber bekannten Verfahren weiterhin den Vorteil, dass eine bereits ausgerollte und ausgerichtete Bitumenbahn vor dem Anschweißen nicht mehr aufgerollt werden muss.

Das sukzessive Anheben der Längsabschnitte wird beispielsweise mittels eines Hebeelements durchgeführt, welches entlang einer Längsrichtung der Bitumenbahn bewegt wird und welches eine Rampe aufweist, auf der die Unterseite der Längsabschnitte entlang gleitet. Die Unterseite der Längsabschnitte wird dabei vorzugsweise nach Verlassen des Hebeelements aufgeschmolzen.

Im Folgenden werden anhand der zugehörigen Zeichnungen Beispiele einer Vorrichtung zum Verschweißen einer Bitumenbahn mit einem Untergrund näher beschrieben.

Es zeigen:
Fig. 1 eine schematische Draufsicht auf eine Vorrichtung zum Verschweißen einer auf einem Untergrund ausgerollten Bitumenbahn, die nicht zur Erfindung gehört,
Fig. 2 eine schematische Seitenansicht der in Figur 1 gezeigten Vorrichtung,
Fig. 3 eine schematische Draufsicht auf eine Vorrichtung, die nicht zur Erfindung gehört,
Fig. 4 eine schematische Seitenansicht der in Figur 3 gezeigten Vorrichtung,
Fig. 5 eine schematische Seitenansicht des in den Fig. 3 und 4 dargestellten Hebeelements, in dem eine Brennereinrichtung integriert ist,
Fig. 6 eine schematische Seitenansicht auf eine Vorrichtung gemäß einer Ausführungsform der Erfindung, und
Fig. 7 eine schematische Rückansicht der in Fig. 6 gezeigten Vorrichtung.
Figur 8 zeigt eine Vorrichtung zum Verschweißen von Bitumenbahnen, wobei die Vorrichtung in dieser Figur nicht zur Erfindung gehört und in einer perspektivischen Ansicht von vorne gezeigt ist.
Figur 9 zeigt die Vorrichtung gemäß Fi. 8 in einer seitlichen Ansicht.
Figur 10 zeigt die Vorrichtung gemäß Fig. 8 von unten.
Figur 11 zeigt eine weitere perspektivische Ansicht der Vorrichtung gemäßFig. 8.

Die im Anschluss beschriebenen Vorrichtungen sowie das im Detail erläuterte Verfahren dienen dazu, eine Bitumenbahn vollflächig oder streifenweise mit einem Untergrund zu verschweißen. Dabei können Rand- bzw. Nahtbereiche der Bitumenbahn zunächst unverschweißt bleiben, die dann in einem letzten Arbeitsgang manuell mittels eines Handbrenners verschweißt werden. Der Begriff "über im Wesentlichen die gesamte Breite der Bitumenbahn" bringt zum Ausdruck, dass mittels der beschriebenen Vorrichtung solche Randbereiche der Bitumenbahn zunächst unbearbeitet bleiben können.

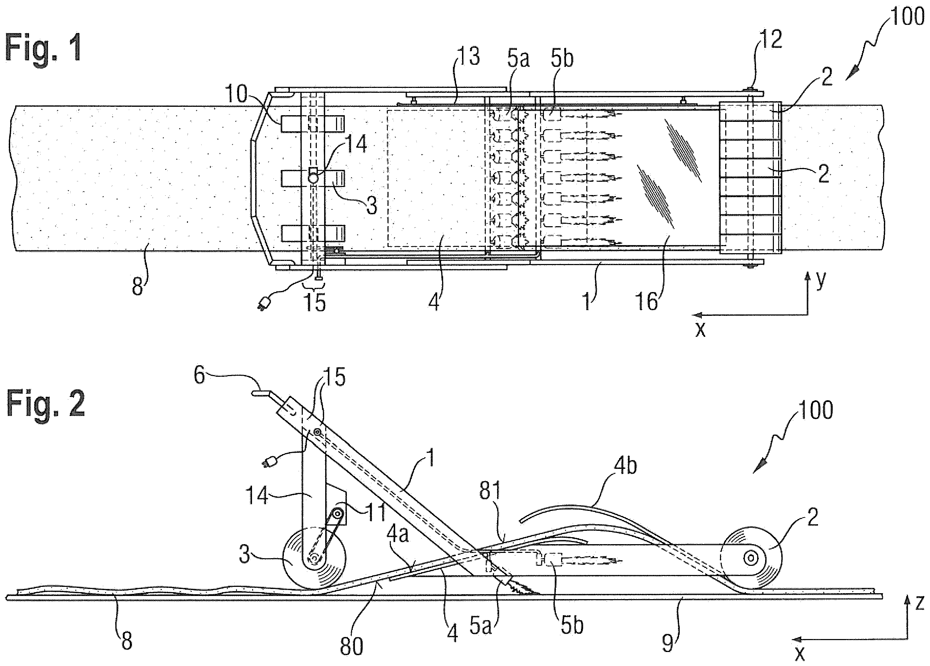

Mit Bezug auf die Fig. 1 und 2 wird eine Vorrichtung 100 zum Verschweißen einer Bitumenbahn mit einem Untergrund beschrieben, welche insbesondere dazu eingerichtet ist, im Wesentlichen die gesamte Breite der Bitumenbahn mit dem Untergrund zu verschweißen.

Die Vorrichtung weist ein auf drehbaren Rollen 2, 3, 10 gelagertes Fahrgestell 1 auf, wodurch die Vorrichtung 100 auf einem Untergrund 9 verfahren werden kann.

Die Rolle 3 ist als Antriebsrolle ausgebildet, welche von einem Motor 11, beispielsweise einem Elektromotor angetrieben wird, dessen Geschwindigkeit einstellbar ist bzw. stufenlos geregelt werden kann. Im Betrieb der Vorrichtung 100 liegt die Antriebsrolle 3 auf einer Oberseite 81 der Bitumenbahn 8 auf.

Mittels eines Handgriffs 6, der über eine Lenkachse 14 mit der Antriebsrolle 3 verbunden ist, kann die Fahrtrichtung der Vorrichtung 100 eingestellt werden. Dabei läuft der Antrieb der Antriebsrolle 3 mittels des Motors 11 über ein Pendelrad, wodurch sich die Vorrichtung 100 leichter steuern lässt.

Auf der gleichen Achse, auf welcher die Antriebsrolle 3 gelagert ist, sind weitere Rollen 10 vorgesehen, um ein Kippen der Vorrichtung 100 zu verhindern. Die Ausrichtung dieser Rollen 10 erfolgt ebenfalls durch eine Bewegung des Handgriffs 6 derart, dass sie in dieselbe Richtung wie die Antriebsrolle 3 zeigen.

Zwischen der Antriebsrolle 3 und den Rollen 2 ist ein Hebeelement 4, das auch als Führungseinrichtung ausgebildet sein kann, angeordnet. Das Hebeelement 4 wird unterhalb der Unterseite 80 einer Bitumenbahn 8 eingeführt, so dass Längsabschnitte der Unterseite 80 der Bitumenbahn 8 entlang einer geneigten Rampe 4a des Hebeelements 4 verlaufen und sukzessive angehoben werden. Die Höhe der Rampe 4a nimmt mit zunehmendem Abstand von der Antriebsrolle 3 zu. Anstelle einer vollflächig ausgebildeten Rampe 4a können beispielsweise auch einzelne, als Stangen ausgebildete Führungseinrichtungen vorgesehen sein, welche entlang der Querrichtung Y beabstandet angeordnet sind und dieselbe Neigung wie die Rampe 4a aufweisen. Zur Verminderung der Reibung zwischen der Bitumenbahn 8 und dem Hebeelement 4 kann dieses auch aus einer oder mehreren entlang der Längsrichtung X beabstandet angeordneten Walzen oder Rollen gebildet sein. Obwohl nicht dargestellt, kann der Neigungswinkel und die Höhe der Rampe 4a sowie deren Abstand zum Untergrund 9 einstellbar sein. Diese Einstellung kann abhängig gemacht werden von der Art der zu verschweißenden Bitumenbahn, der Schweißtemperatur sowie der Art des Untergrundes.

Um das Verschweißen von Bitumenbahnen 8 mit unterschiedlicher Breite, beispielsweise 100 cm bzw. 110 cm zu ermöglichen, ist ferner eine in Längsrichtung X der Vorrichtung 100 verlaufende Distanzschiene 13 vorgesehen, deren Abstand relativ zu einer seitlichen Begrenzung der Vorrichtung 100 einstellbar ist. Durch eine geeignete Einstellung des Abstands können mittels der Distanzschiene 13 und einer entsprechenden gegenüberliegenden Begrenzung Bitumenbahnen 8 unterschiedlicher Breite angehoben werden.

Beim Verschweißen der bereits ausgerollten und ausgerichteten Bitumenbahn 8 mit dem Untergrund 9 wird die Vorrichtung mittels der Antriebsrolle 3, welche auf der Bitumenbahn 8 aufliegt, in Richtung der in den Fig. 1 und 2 gezeigten Richtung X relativ zu der Bitumenbahn 8 bewegt. Auf diese Weise werden mittels des Hebeelements 4 sukzessive jeweilige Längsabschnitte der Bitumenbahn 8 vom Untergrund 9 angehoben. Nach Verlassen der Rampe 4a des Hebeelements 4 wird die Unterseite 80 der Längsabschnitte, welche dem Untergrund 9 zugewandt ist, mittels einer unterhalb der Rampe 4a angeordneten Brennereinrichtung 5b erwärmt und zum Schmelzen gebracht. Mit einer weiteren Brennereinrichtung 5a, welche ebenfalls unterhalb der Rampe 4a vorgesehen ist, wird außerdem der Untergrund 9 erwärmt.

Die Brennereinrichtungen 5a, 5b sind als Flammenbrenner ausgebildet, welche mit einem Gemisch aus Brenngas und Sauerstoff betrieben werden und deren Flamme eine Temperatur von etwa 700°C bis 800°C erreicht. Die Zufuhr des Sauerstoffs und des Brenngases während des Schweißvorgangs ist mittels eines nicht dargestellten Reglers, welcher über eine Start- und Stoppautomatik verfügt, separat einstellbar, um die Hitzezufuhr zu der Bitumenbahn 8 bzw. zum Untergrund 9 auf die erforderliche Temperatur einzustellen.

Der Regler kann beispielsweise in einem an dem Handgriff 6 vorgesehenen Bedienfeld (nicht gezeigt) integriert sein. Weiterhin kann das Bedienfeld einen Regler zur Einstellung der Fahrgeschwindigkeit der Vorrichtung 100 enthalten. Bei einer anderen Ausführungsform kann das Bedienfeld einen Computer mit einer Software zur Steuerung der Vorrichtung 100 aufweisen. In diesem Fall kann mittels der Software die Art der Bitumenbahn aus verschiedenen Bitumenbahnarten ausgewählt werden, wobei je nach Art der ausgewählten Bitumenbahn die Fahrgeschwindigkeit und die Brennleistung automatisch eingestellt werden, um ein optimales Aufschweißergebnis zu erzielen.

Der Handgriff 6 ist als Sicherheitshandgriff ausgebildet, welcher beim Betrieb der Vorrichtung 100 durch den Bediener gedrückt bleiben muss. Aus Sicherheitsgründen wird beim Loslassen dieses Griffes die Gaszufuhr und der Antrieb sofort unterbrochen bzw. gestoppt. Da der Handgriff am vorderen Ende der Vorrichtung 100 vorgesehen ist, geht der Bediener beim Verschweißen der Bitumenbahn 8 vorzugsweise rückwärts, um den Schweißvorgang beobachten zu können.

Die Energieversorgung zum Betreiben des Elektromotors und zur Steuerung der Vorrichtung 100 bzw. die Gasversorgung für die Brennereinrichtung 5a, 5b kann extern über Kabel bzw. Gasleitungen erfolgen, welche an einem Anschlussmodul 15 der Vorrichtung 100 angeschlossen werden. Die Energieversorgung kann jedoch auch über eine interne Batterie und die Gasversorgung mittels Gasflaschen erfolgen, die in einem auf der Vorrichtung 100 vorgesehenen Sicherheitskäfig (nicht dargestellt) aufgenommen sind, der die Gasflaschen sichert.

Wie in den Fig. 1 und 2 gezeigt, umfassen die Brennereinrichtungen 5a, 5b jeweils eine Vielzahl von einzelnen, entlang einer Querrichtung Y der Vorrichtung 100 beabstandet angeordneten Brennsegmenten, die derart eingerichtet sind, dass die jeweiligen Flammen im Wesentlichen entlang der Längsrichtung X der Vorrichtung zu den Rollen 2 bzw. schräg nach unten austreten. Bevorzugt sind die einzelnen Brennsegmente derart an quer zur Längsrichtung X der Vorrichtung 100 verlaufenden Stangen befestigt, dass jeweilige Austrittswinkel der Flammen relativ zum Untergrund 9 individuell einstellbar sind.

Des Weiteren können seitlich der Brennereinrichtungen angeordnete Windschutzbleche vorgesehen sein, um eine zielgenaue Ausrichtung der Flammen bei Wind zu ermöglichen. Durch das Hebeelement 4, die Windschutzbleche, die Bitumenbahn 8 und den Untergrund 9 wird ein im Wesentlichen geschlossener Raum gebildet. Dadurch wird die beim Verschweißen verbrauchte Brennerenergie nahezu vollständig zur Erwärmung der Bitumenbahn 8 und des Untergrundes 9 genutzt.

Durch das Vorsehen einer Vielzahl von einzelnen Brennsegmenten wird erreicht, dass die gesamte Breite der Unterseite 80 der Bitumenbahn 8 bzw. der Untergrund 9 gleichmäßig erwärmt wird. Die Brennereinrichtungen 5a, 5b können aber auch jeweils nur ein einziges Brennsegment umfassen. Durch Abstimmung des eingestellten Vortriebs mittels der Antriebsrolle 3 und der zugeführten Brennleistung kann die Bitumenbahn 8 punktgenau mit der richtigen Hitzeeinwirkung verarbeitet werden, so dass Beschädigungen durch Überhitzung und somit eine Zerstörung der SBS Moleküle bei Elastomerbitumenbahnen verhindert wird. Hierdurch wird eine längere Haltbarkeit der neu verlegten Bitumenbahnen erreicht.

Zwischen dem Halteelement 4 und den Rollen 2 ist ein Zwischenraum 16 vorgesehen, durch den die zuvor angehobenen Längsabschnitte der Bitumenbahn 8 bei einer weiteren Bewegung wieder in Kontakt mit dem Untergrund 9 gelangen. Dabei weist ein den Rollen 2 zugewandtes Ende des Hebeelements 4 eine Biegung nach unten auf, um die Längsabschnitte in Richtung Untergrund zu leiten und einen gewissen Abstand derselben nach dem Verlassen des Halteelements von der Brennereinrichtung 5b zu gewährleisten. Des Weiteren wird die Oberseite 81 der Bitumenbahn 8 in dem Falle, dass die Bitumenbahn 8 auf Grund ihrer Steifigkeit nicht von selbst durch ihr Eigengewicht abgesenkt wird, mittels einer beispielsweise als gebogenes Leitblech ausgebildeten Ablenkeinrichtung 4b in Richtung des Untergrunds 9 geleitet. Wie in Fig. 2 dargestellt überlappen dabei voneinander in Y-Richtung beabstandete Abschnitte des Hebeelements 4 und der Ablenkeinrichtung 4b.

Durch die Anpressrollen 2, welche auf der Oberseite 81 der Bitumenbahn 8 rollen, werden anschließend die erwärmten Abschnitte der Bitumenbahn 8 auf den ebenfalls erwärmten Untergrund 9 gepresst, wodurch die Bitumenbahn 8 vollflächig und homogen mit dem Untergrund 9 verschweißt wird.

Die einzelnen Anpressrollen 2 sind getrennt auf der Anpressrollenachse 12 gelagert, um den Druck auf einem unebenen Untergrund angleichen zu können. Gegebenenfalls können die einzelnen Anpressrollen 2 mit einem vorbestimmten Spiel entlang der in Fig. 2 gezeigten Richtung Z beweglich gelagert sein, um eine weiter verbesserte Druckangleichung zu erreichen.

Weiterhin sind in den Fig. 1 und 2 nicht gezeigte Abstreifkeile vorgesehen, welche mit einem jeweiligen Ende an den Laufflächen der Anpressrollen 2 anliegen oder diesen angenähert sind, um anhaftende Bitumenreste von den Anpressrollen 2 zu entfernen.

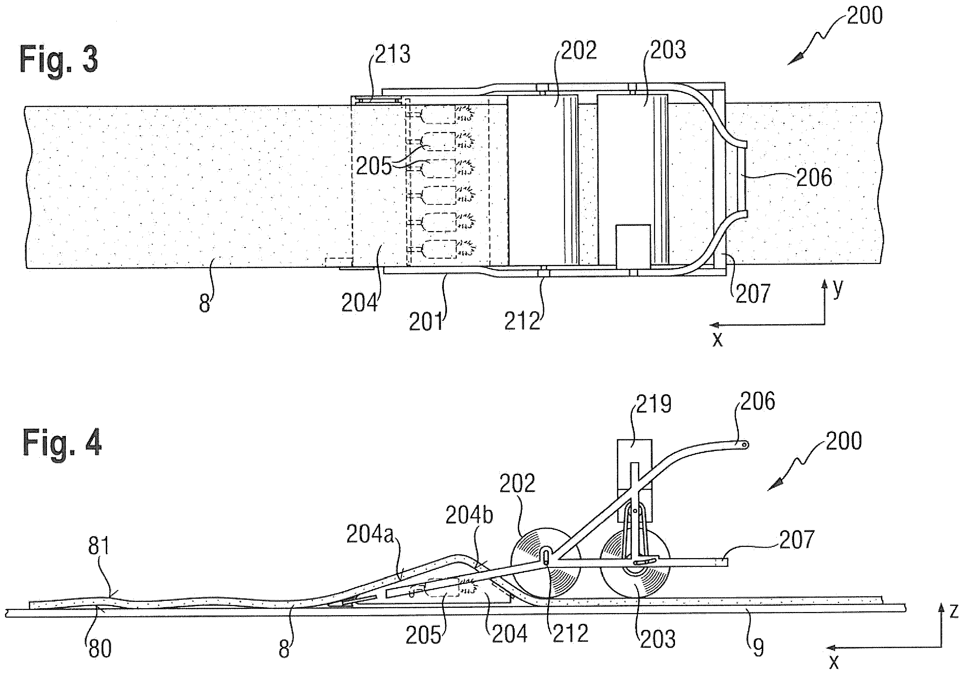

Mit Bezug auf die Fig. 3 und 4 wird eine zweite Vorrichtung 200 zum Verschweißen einer Bitumenbahn mit einem Untergrund beschrieben, welche insbesondere dazu eingerichtet ist, im Wesentlichen die gesamte Breite der Bitumenbahn mit dem Untergrund zu verschweißen. Die Vorrichtung 200 weist ein auf Rollen 202, 203 gelagertes Fahrgestell 201 auf, wodurch die Vorrichtung 200 auf dem Untergrund verfahrbar ist. Dabei ist die Rolle 203 als Antriebsrolle ausgebildet, welche von einem nicht dargestellten Motor auf die gleiche Weise wie die Antriebsrolle 3 der Vorrichtung 100 angetrieben wird. Im Unterschied zur Antriebsrolle 3 ist die Antriebsrolle 203 als Walze ausgebildet, deren Breite nahezu der Breite des Fahrgestells 201 entspricht, und welche ein hohes Eigengewicht aufweist, um ein Kippen der Vorrichtung 200 nach vorne zu verhindern.

Des Weiteren ist im Unterschied zur in den Fig. 1 und 2 gezeigten Vorrichtung die Anpressrolle 202 als einzelne Anpresswalze ausgebildet. Die Achse 212 der Walze ist mit einem gewissen Spiel entlang der Z-Richtung, beispielsweise mittels eines Langlochs derart gelagert, dass Unebenheiten des Untergrunds 9 ausgeglichen werden können, um eine gleichmäßige Druckverteilung zu erreichen. Zur Befestigung der Anpresswalze an der Achse 212 ist ein Schnellverschluss (nicht dargestellt) vorgesehen, wodurch Walzen mit verschiedenen, an jeweilige Bitumenbahnbreiten angepasste Breiten schnell und ohne Zuhilfenahme von Werkzeug ausgetauscht werden können. Wie bei der in den Fig. 1 und 2 gezeigten Ausführungsform kann auch bei der Vorrichtung 200 ein nicht dargestellter Abstreifkeil vorgesehen sein, welcher mit einem Ende an der Lauffläche der Anpresswalze 202 anliegt oder an diese angenähert ist, um an der Lauffläche anhaftende Bitumenreste abzustreifen.

An einem in Bewegungsrichtung während des Schweißvorgangs gesehenen vorderen Ende der Vorrichtung 200 ist ein Hebeelement 204, das auch als Führungseinrichtung 204 ausgebildet sein kann, angeordnet, das unterhalb der Unterseite 80 der Bitumenbahn 8 eingeführt wird. Beim Betrieb der Vorrichtung 200 gleiten Längsabschnitte der Unterseite 80 der Bitumenbahn 8 entlang einer geneigten Rampe 204a des Hebeelements 204, wodurch die Längsabschnitte sukzessive angehoben werden. Zumindest ein Bereich der Unterseite der Bitumenbahn kann dabei während des Schweißvorgangs abschnittsweise durch das Hebeelement 204 geführt werden. Als Führungs- bzw. Gleitelement dienen hierbei in Fahrtrichtung schräg verlaufende Rampen 204a, 204b. Die Höhe der Rampe 204a nimmt mit zunehmendem Abstand von dem vorderen Ende der Vorrichtung zu, während die Höhe der Rampe 204b, welche an die Rampe 204a anschließt, mit zunehmendem Abstand abnimmt. Anstelle von vollflächig ausgebildeten Rampen 204a, 204b können beispielsweise auch einzelne, als Stangen ausgebildete Führungseinrichtungen vorgesehen sein, welche entlang der Querrichtung Y beabstandet angeordnet sind und dieselbe Neigung wie die Rampen 204a, 204b aufweisen. Zur Verminderung der Reibung zwischen der Bitumenbahn 8 und dem Hebeelement 204 kann dieses auch aus einer oder mehreren, entlang der Längsrichtung X beabstandet angeordneten Walzen oder Rollen gebildet sein. Die Neigungswinkel und die Höhe der Rampen 204a, 204b sowie deren Abstände zum Untergrund 9 können nach Bedarf eingestellt werden.

Um das Verschweißen von Bitumenbahnen unterschiedlicher Breite zu ermöglichen, ist ferner ebenso wie bei der Vorrichtung 100 eine längs der Vorrichtung 200 verlaufende Distanzschiene 213 vorgesehen, deren Abstand relativ zu einer seitlichen Begrenzung der Vorrichtung 200 einstellbar ist.

Beim Verschweißen der ausgerollten Bitumenbahn 8 mit dem Untergrund 9 wird die Vorrichtung 200 mittels der Antriebsrolle relativ bezüglich der Bitumenbahn 8 in X-Richtung bewegt. Dabei werden sukzessive Abschnitte der Bitumenbahn 8 mittels des Hebeelements 204 angehoben und die Unterseite 80 der angehobenen Abschnitte mittels einer in dem Hebeelement 204 integrierten Brennereinrichtung 205 nach Verlassen des Hebeelements erwärmt und zum Schmelzen gebracht. Gleichzeitig wird mittels der Brennereinrichtung 205 auch der Untergrund 9 erwärmt. Um eine zielgenaue Ausrichtung der Flammen der Brennereinrichtung 205 bei Wind zu erreichen, können zusätzlich seitliche Windschutzbleche vorgesehen sein. Abgesehen davon, dass bei der in den Fig. 3 und 4 dargestellten Vorrichtung 200 die Brennereinrichtung 205 lediglich einzelne, in Querrichtung Y beabstandete Brennsegmente umfasst, welche Flammen in Längsrichtung X zur Andrückwalze 202 ausgeben, unterscheidet sich die Brennereinrichtung 205 bzw. deren Steuerung nicht von der in den Fig. 1 und 2 dargestellten Brennereinrichtung 5a, 5b.

Die Gasversorgung der Brennereinrichtung 205 erfolgt über Gasflaschen (nicht gezeigt), welche in einem Sicherheitskäfig 219 der Vorrichtung 200 angeordnet sind. Dabei sind die Gasflaschen derart gelagert, dass sie gegen ein Umfallen gesichert sind.

Die Führungseinrichtung 204 führt die angehobenen Abschnitte der Bitumenbahn 8 bei einer weiteren Bewegung der Vorrichtung 200 in X-Richtung mittels der Rampe 204b wieder in Richtung des Untergrunds 9, so dass die zuvor angehobenen und erwärmten Abschnitte der Bitumenbahn 8 wieder auf dem Untergrund 9 aufliegen.

Danach wird durch das Eigengewicht der Anpresswalze 202 die Bitumenbahn mit dem Untergrund 9 vollflächig und homogen verschweißt.

Um den Anpressdruck gegebenenfalls zu erhöhen, ist ein Fußtritt 207 an einem hinteren Ende der Vorrichtung 100 vorgesehen, auf das der Benutzer mit seinem Fuß eine zusätzliche Kraft in Richtung des Untergrunds 9 ausüben kann.

Am Handgriff 206, der ebenso wie der Handgriff 6 der ersten Ausführungsform als Sicherheitsgriff ausgebildet ist, sind Steuermittel zur Steuerung der Antriebsgeschwindigkeit und der Gaszufuhr für die Brennereinrichtung 205 vorgesehen. Es ist jedoch auch möglich, am Handgriff 6 ein Bedienfeld vorzusehen, welches ebenso konfiguriert ist wie das Bedienfeld der Vorrichtung 100. Da sich der Handgriff 206 am hinteren Ende der Vorrichtung 200 befindet, geht der Benutzer während des Schweißvorgangs hinter oder neben der Vorrichtung 200, so dass er im Unterschied zu der in den Fig. 1 und 2 gezeigten Vorrichtung vorwärts gehen kann.

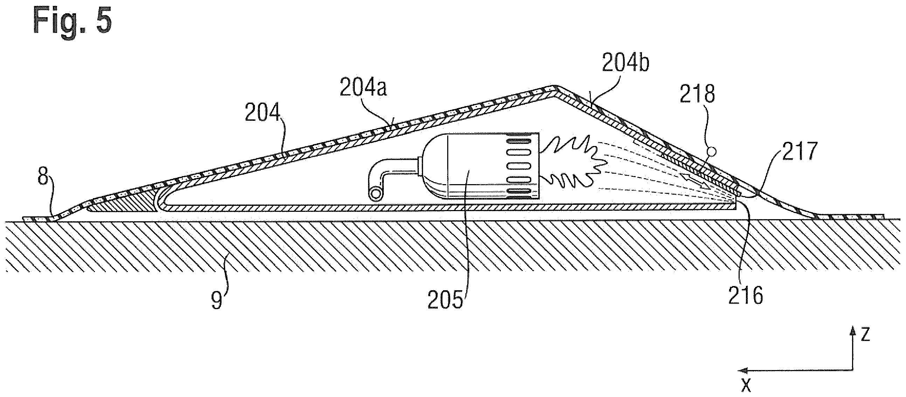

Fig. 5 zeigt eine schematische Seitenansicht des in den Fig. 3 und 4 dargestellten Hebeelements 204, in welchem die Brennereinrichtung integriert ist. Die Brennereinrichtung 205 ist innerhalb eines Hohlraums der Führungseinrichtung 204 angeordnet, welche einen in etwa dreiecksförmigen Querschnitt aufweist. An einem bezüglich der Bewegungsrichtung während des Schweißvorgangs hinteren Ende der Führungseinrichtung 204 ist eine Austrittsöffnung 216 vorgesehen, aus der die Flammen austreten und auf die Unterseite der Bitumenbahn 8 sowie auf den Untergrund 9 auftreffen, um diese zu erwärmen. Mit einer an der Austrittsöffnung 216 vorgesehenen und entlang des in der Fig. 5 dargestellten Doppelpfeils verschiebbaren Platte 217 kann einerseits die Größe der Austrittsöffnung 216 eingestellt werden und andererseits die Richtung der austretenden Flammen verändert werden. Durch Verschieben und Fixieren der Position der Platte 217 mittels einer Feststellschraube 218 kann somit das Verhältnis der Wärmezufuhr zu jeweiligen Abschnitten der Bitumenbahn 8 und des Untergrund 9 verändert werden. Wenn beispielsweise die Platte 217 weit in Richtung des Untergrunds 9 geschoben wird, wird die Flamme nahezu vollständig auf den Untergrund gerichtet, so dass die Wärmezufuhr hauptsächlich zu dem Untergrund 9 erfolgt. Ist die Austrittsöffnung 216 hingegen vollständig geöffnet, so wird der Hauptteil der Flammen auf die Bitumenbahn 8 gerichtet und lediglich ein geringer Anteil der austretenden Flammen trifft auf Grund der gegenüber der Ausbreitungsrichtung der Flammen schräg verlaufenden Innenfläche des Hohlraums auf dem Untergrund 9 auf.

Wenn seitlich der Brennereinrichtung 205 Windschutzbleche vorgesehen sind, wird durch das Halteelement 204 und die Windschutzbleche ein im Wesentlichen umschlossener Raum gebildet, in dem die Brennereinrichtung 205 angeordnet ist. Daher kann die beim Verschweißen verbrauchte Brennenergie nahezu vollständig zur Erwärmung der Bitumenbahn und des Untergrunds genutzt werden.

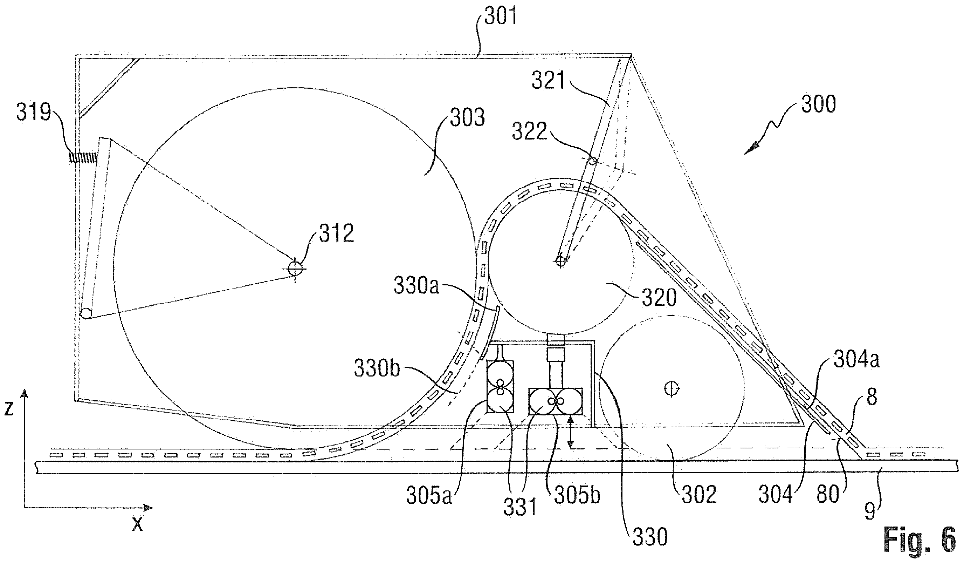

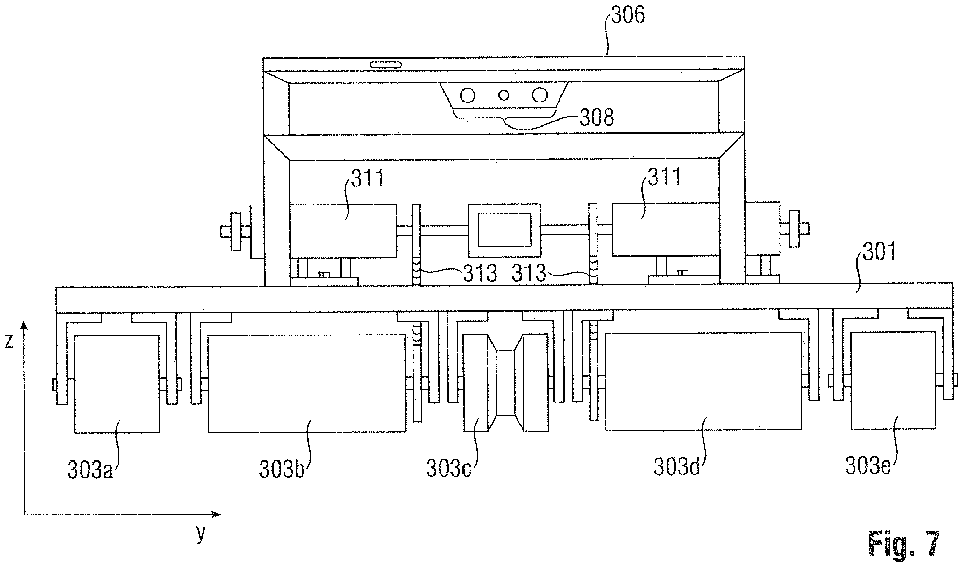

Mit Bezug auf die Fig. 6 und 7 wird eine erfindungsgemäße Vorrichtung 300 zum Verschweißen einer Bitumenbahn mit einem Untergrund beschrieben, welche insbesondere dazu eingerichtet ist, im Wesentlichen die gesamte Breite der Bitumenbahn mit dem Untergrund zu verschweißen. Die Vorrichtung 300 weist ein auf drehbaren Rollen 302, 303 gelagertes Fahrgestell 301 auf, welches auch als Rahmen ausgebildet sein kann, wodurch die Vorrichtung 300 auf dem Untergrund 9 verfahrbar ist. Wie insbesondere aus der Fig. 7 ersichtlich ist, welche eine schematische Rückansicht der Vorrichtung 300 zeigt, sind entlang einer Querrichtung Y mehrere Anpressrollen 303a bis 303e beabstandet angeordnet. Die Abstände zwischen den einzelnen Anpressrollen 303a bis 303e sind derart gewählt, dass das Schweißergebnis nicht negativ beeinflusst wird, d.h. dass eine vollflächige Verschweißung der Bitumenbahn mit dem Untergrund gewährleistet ist.

Die Rollen bzw. Walzen 303b, 303d sind hierbei als Antriebsrollen eingerichtet, welche mittels Motoren 311, beispielsweise Elektromotoren, über Ketten bzw. Keilriemen 313 separat angetrieben werden können. Die Motoren können sowohl in Vorwärts- als auch in Rückwärtsrichtung betrieben werden, wobei die jeweiligen Antriebsgeschwindigkeiten separat einstellbar, bzw. stufenlos regelbar sind. Auf diese Weise kann die Vorrichtung 300 durch Antreiben der Rollen 303b, 303d in entgegengesetzte Richtungen nahezu auf der Stelle um 180° gedreht werden, bspw. nachdem eine Bitumenbahn 8 vollständig verschweißt wurde und eine neue Bitumenbahn 8 entlang der entgegengesetzten Richtung verschweißt werden soll. Zum anderen können bspw. beim Verschweißen der Bitumenbahn 8 entlang einer Querrichtung eines geneigten Dachs die Rollen 303b, 303d mit unterschiedlicher Vortriebsgeschwindigkeit angesteuert werden, um ein Abdriften der Vorrichtung 300 zu vermeiden. Die Achsen 312 der Rollen 303a, 303c und 303e sind mittels Federeinrichtungen 319 in gewissem Maße beweglich gelagert, um Unebenheiten des Untergrunds 9 ausgleichen zu können. Dies ist insbesondere bei einer überlappenden Verlegung von Bitumenbahnen 8 vorteilhaft, da durch die bewegliche Lagerung der Achsen 312 die durch die überlappenden Abschnitte hervorgerufenen Höhenunterschiede in Folge der Höhe einer Bitumenbahn von ca. 5 mm ausgeglichen werden können.

An einem in Bewegungsrichtung während des Schweißvorgangs gesehenen vorderen Ende der Vorrichtung 300 ist ein Hebelelement 304 vorgesehen, welches auch als Führungseinrichtung 304 ausgebildet sein kann, und das unterhalb der Unterseite 80 der Bitumenbahn 8 eingeführt wird. Beim Betrieb der Vorrichtung 300 gleiten Längsabschnitte der Unterseite 80 der Bitumenbahn entlang einer geneigten Rampe 304a des Hebeelements 304, wodurch die Längsabschnitte sukzessive angehoben werden. An Stelle einer vollflächig ausgebildeten Rampe 304a kann bspw. auch eine aus einzelnen Stangen ausgebildete Führungseinrichtung vorgesehen sein, wobei die Stangen entlang der Querrichtung Y beabstandet angeordnet sind und dieselbe Neigung wie die Rampe 304 aufweisen. Zur Verminderung der Reibung zwischen der Bitumenbahn 8 und dem Hebeelement 304 kann dieses auch aus einer oder mehreren, entlang der Längsrichtung X beabstandet angeordneten Walzen oder Rollen gebildet sein. Der Neigungswinkel und die Höhe der Rampe 304a sowie deren Abstand zum Untergrund 9 kann nach Bedarf eingestellt werden.

In der in Fig. 6 dargestellten Ausführungsform ist das Hebeelement 304 in Fahrtrichtung X gesehen vor der Rolle 302 angeordnet. Bei einer anderen Ausführungsform kann die Rolle 302, welche insbesondere dazu vorgesehen ist, ein Kippen der Vorrichtung zu vermeiden, in Fahrtrichtung X gesehen auch vor dem Hebeelement 304 angeordnet sein. Des Weiteren können statt einer einzelnen Rolle 302 auch mehrere, beispielsweise zwei Rollen entlang der Y-Richtung beabstandet vorgesehen sein.

Um das Verschweißen von Bitumenbahnen unterschiedlicher Breite zu ermöglichen, ist ferner ebenso wie bei den Vorrichtungen 100 und 200 eine längs der Vorrichtung 300 verlaufende Distanzschiene vorgesehen (nicht gezeigt), die ebenso wie die mit dem Bezugszeichen 213 versehene Distanzschiene ausgebildet sein kann, und deren Abstand relativ zu einer seitlichen Begrenzung der Vorrichtung 300 einstellbar ist.

Zwischen dem Hebeelement 304 und den Rollen 303 ist beabstandet vom Untergrund 9 eine Aufnahmewalze 320 vorgesehen, auf welcher die das Hebeelement 304 verlassenden Längsabschnitte der Bitumenbahn 8 aufgenommen werden. Die Aufnahmewalze 320 ist mittels einer Aufhängungs- und Spannvorrichtung 321, 322 an dem Rahmen 301 befestigt, mit welcher ein Abstand zwischen der Aufnahmewalze 320 und den Anpressrollen 303 einstellbar ist. Zum Einstellen des Abstands kann beispielsweise ein feststellbares Gelenk 322 dienen. Vor dem Beginn des Schweißvorgangs wird ein Ende der Bitumenbahn 8 in einem gelösten Zustand der Spannvorrichtung 321, 322 in einen Zwischenraum zwischen der Aufnahmewalze 320 und den Anpressrollen 303 eingefügt. Im Betrieb der Vorrichtung 300 ist die Spannvorrichtung 321,322 in einem gespannten bzw. festgestellten Zustand, um die Bitumenbahn 8 mittels der Aufnahmewalze 320 gegen die Anpressrollen 303 zu pressen.

Unterhalb der Aufnahmewalze 320 sind Brennereinrichtungen 305a, 305b vorgesehen, welche zum Erwärmen des Untergrunds 9 bzw. zum Aufschmelzen der Unterseite 80 der Bitumenbahn 8 eingerichtet sind. Wie in Fig. 6 durch den Doppelpfeil angedeutet, ist der Abstand der Brennereinrichtung 305b vom Untergrund 9 einstellbar. Bevorzugt sind auch die Abstände der Brennereinrichtung 305a von den Anpressrollen 303 sowie von dem Untergrund 9 und gegebenenfalls ein Neigungswinkel der Brennereinrichtung 305a einstellbar.

Die Brennereinrichtungen 305a, 305b sind als Infrarotstrahler ausgebildet, und weisen bevorzugt jeweils zwei Infrarotlampen 331 (IR-Lampen) auf, die sich nahezu über die gesamte Breite der Vorrichtung 300 erstrecken. Die einzelnen IR-Lampen können beispielsweise eine Leistungsaufnahme von 5000 W aufweisen und auf eine Temperatur von 1750 °C aufheizbar sein. Dabei kann die Heizleistung der einzelnen Lampen separat eingestellt werden. Bei einer Ausführungsform können auch statt einer IR-Lampe mehrere einzelne IR-Lampen entlang der Querrichtung Y der Vorrichtung 300 vorgesehen sein, um gegebenenfalls auftretende Temperaturgradienten entlang der Querrichtung der Bitumenbahn auszugleichen. Im Unterschied zu den bei den Vorrichtungen 100, 200 vorgesehenen Flammenbrennern 5a, 5b, 205 können die als Infrarotstrahler ausgebildeten Brennereinrichtung 305a, 305b vorteilhaft unabhängig von einer Sauerstoffzufuhr betrieben werden, da zum Betrieb der IR-Lampen lediglich eine Stromzufuhr erforderlich ist.

Zur Vermeidung einer Überhitzung der Rollen 302 und 320 bzw. deren Lagerungen und zur gezielten Einwirkung der Heizleistung auf die Unterseite der Bitumenbahn 8 bzw. auf den Untergrund 9 sind die Brennereinrichtungen 305a, 305b von einem Abschirm- oder Abstrahlblech 330 umgeben, an welchem die Brennereinrichtungen 305a, 305b befestigt sein können, und dessen Innenseite bevorzugt als wärmestrahlungsreflektierende Oberfläche ausgebildet ist.

An dem Abstrahlblech 330 ist eine Ablenkeinrichtung 330a, 330b angeordnet, mittels derer gegebenenfalls die Unterseite 80 der die Aufnahmewalze 320 verlassenden Abschnitte der Bitumenbahn abgelenkt wird. Der obere Abschnitt 330a der Ablenkeinrichtung kann vollflächig ausgebildet sein, während der untere Abschnitt 330b Öffnungen aufweist, durch welche die Wärmestrahlung von der Brennereinrichtung 305a direkt auf die Unterseite der Bitumenbahn 80 gelangt. Der untere Abschnitt 330b der Ablenkeinrichtung kann hierzu bspw. mehrere Führungsstäbe umfassen, welche im Abstand von ca. 10 cm entlang der Querrichtung Y angeordnet sind.

Am Handgriff 306, der ebenso wie die Hangriffe 6 und 206 als Sicherheitsgriff ausgebildet ist, sind an einem Bedienfeld 308 Regler zur Steuerung der Antriebsgeschwindigkeiten der Motoren 311 und der Heizleistungen bzw. Temperaturen der einzelnen IR-Lampen 331 vorgesehen. Zusätzlich können auch die Positionen der Brennereinrichtungen 305a, 305b, d.h. die Abstände von den Anpressrollen 303 bzw. vom Untergrund 9 mittels in dem Bedienfeld 308 integrierter Regler einstellbar sein.

Bevorzugt enthält das Bedienfeld 308 einen Computer mit einer Software zur Steuerung der Vorrichtung 300. In diesem Fall kann mittels der Software die Art der Bitumenbahn aus verschiedenen Bitumenbahnen ausgewählt werden, wobei je nach Art der Bitumenbahn die Vortriebsgeschwindigkeit, der Abstand der Brennereinrichtungen 305a, 305b vom Untergrund 9 bzw. von der Unterseite der Bitumenbahn sowie die den IR-Lampen zugeführte Heizleistung automatisch aufeinander abgestimmt werden. Dabei beträgt eine übliche Vortriebsgeschwindigkeit der Vorrichtung 300 etwa 1,5 bis 2 m pro Minute.

Beim manuellen Verschweißen mittels eines Handbrenners beträgt die durchschnittliche Arbeitszeit, um einen Quadratmeter Bitumenbahn mit dem Untergrund zu verschweißen, etwa fünf Minuten. Bei der Verwendung der Vorrichtung 300 hingegen beträgt die Arbeitszeit, um einen Quadratmeter zu verschweißen, lediglich etwa eine Minute. Somit können durch die Verwendung der Vorrichtung 300 etwa 80 % an Arbeitskosten eingespart werden. Des Weiteren kann durch die Verwendung von Infrarotstrahlern im Vergleich zu den Vorrichtungen 100, 200, bei denen die Brennereinrichtungen als Flammenbrenner ausgebildet sind, die Verletzungsgefahr durch Verbrennung weiter verringert werden.

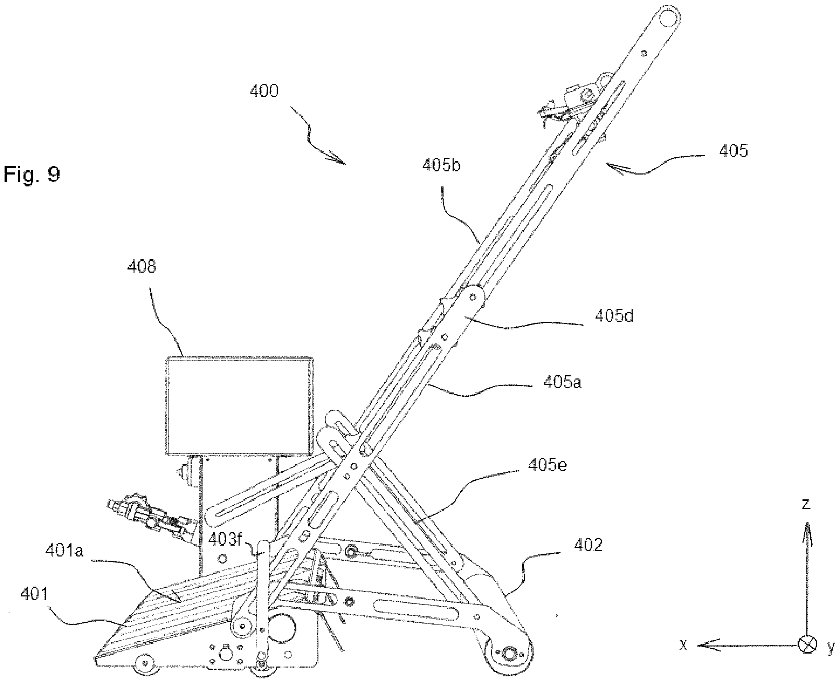

In Fig. 9 bis 11 ist eine Vorrichtung zum Verschweißen ausgerollter Bitumenbahnen gezeigt.

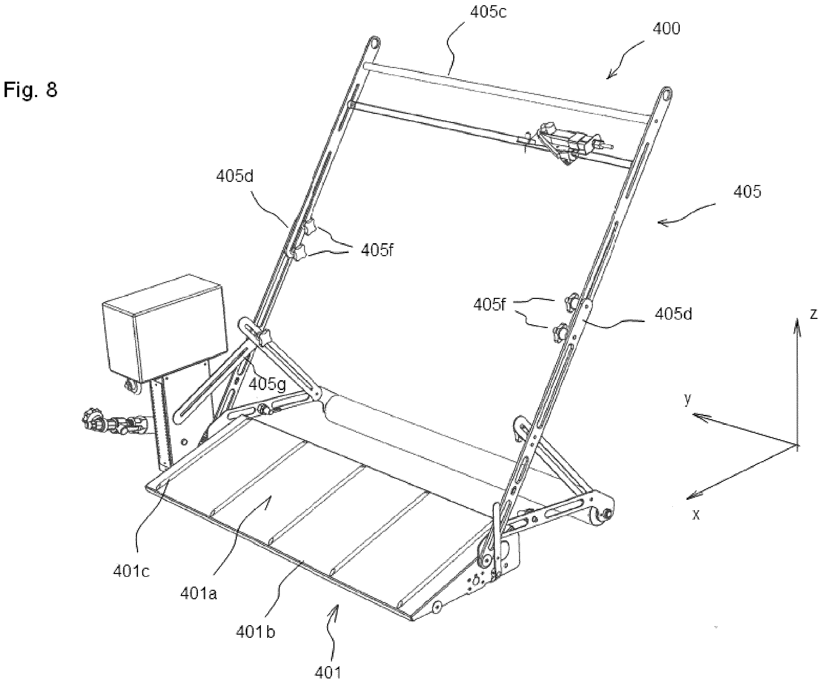

In Fig. 8 ist die Vorrichtung 400 in einer perspektivischen Ansicht gezeigt. Die Vorrichtung 400 wird während eines bestimmungsgemäßen Verschweißvorgangs in die in Fig. 8 gezeigte (positive) X-Richtung bewegt.

Die Vorrichtung 400 weist ein Hebeelement 401 auf, das während des Verschweißvorganges unter einer zu verschweißenden Bitumenbahn (nicht gezeigt) geführt wird.

Das Hebeelement 401 umfasst eine Rampe 401a, die von einer in X-Richtung weisenden ersten Seite 401b ausgehend in negativer X-Richtung ansteigt. Die zu verschweißende Bitumenbahn liegt während der Bewegung der Vorrichtung 400 mit ihren Längsabschnitten auf dem Hebeelement 401 auf und wird in diesem Bereich durch die Rampe 401a sukzessive angehoben.

Auf der Oberfläche der Rampe 401a sind in der Breitenrichtung (Y-Richtung) der Rampe 401a eine Vielzahl von Streben 401c angeordnet. Über diese Streben 401c wird die Anlagefläche zwischen der Bitumenbahn und der Rampe 401a derart verringert, dass die Bitumenbahn leichter über die Rampe 401a gleiten kann.

Wie in den vorherigen Beispielen können anstelle von einer vollflächig ausgebildeten Rampe 401a beispielsweise auch einzelne, als Stangen ausgebildete Führungseinrichtungen vorgesehen sein, welche entlang der Querrichtung der Bitumenbahn bzw. Breitenrichtung des Hebeelementes 401 angeordnet sind und die Steigung der Rampe 401a festlegen.

Weiterhin kann das Hebeelement 401 auch auf derart ausgestaltet sein, dass die Steigung der Rampe 401a variiert bzw. geändert werden kann.

In Fig. 9 ist die Vorrichtung 400 in einer Seitenansicht gezeigt.

Wie in dieser Figur gut ersichtlich ist, steigt die Rampe 401a von der Seite, die bei bestimmungsgemäßem Vorschub der Vorrichtung 400 in Fahrtrichtung (X-Richtung) zeigt, an, wodurch eine zu verschweißende Bitumenbahn während des Betriebes sukzessive von dem Hebeelement über die Rampe 401a laufend angehoben wird.

Das Hebeelement 401 ist bevorzugt aus einem Blech gebildet, das in die in den Figuren gezeigte Keilform gebogen wurde. Hierdurch ist das Hebeelement 401 sehr leicht.

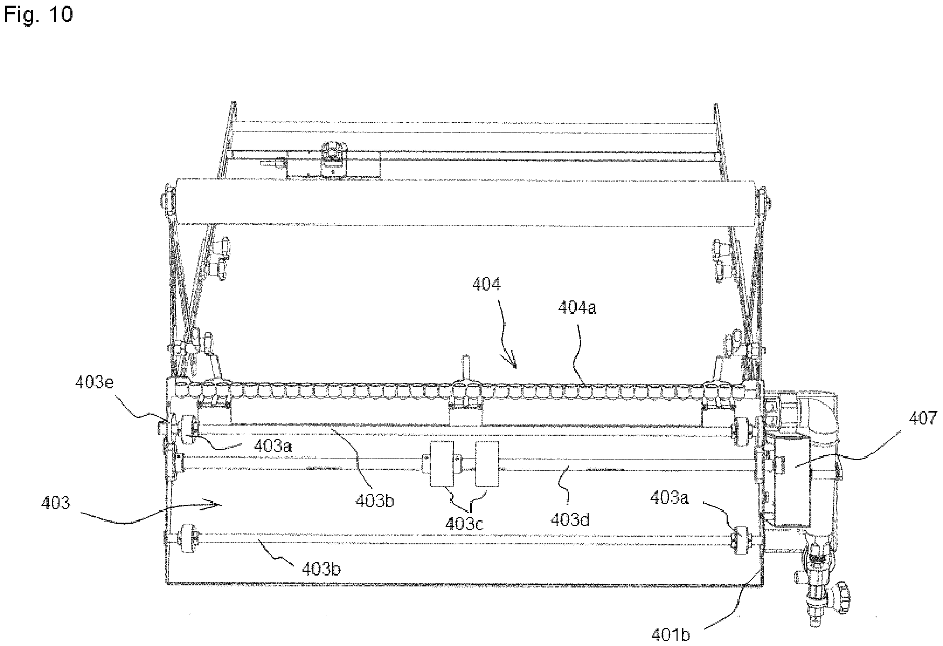

Auf der Unterseite des Hebeelementes 401 ist ein Fahrgestell 403 der Vorrichtung 400 vorgesehen. Das Fahrgestell 403 ist insbesondere in Fig. 10 gut erkennbar.

Das Fahrgestell 403 weist vier Rollen 403a auf, über die die Vorrichtung 400 auf einem Untergrund verfahrbar ist. Die Rollen 403a sind auf zwei Wellen 403b befestigt, die, wie in Fig. 10 gezeigt, in X-Richtung voneinander beabstandet angeordnet sind und sich in Breitenrichtung des Hebeelementes (Y-Richtung) erstrecken. Zwei Rollen 403a sind jeweils auf einer der Wellen 403b befestigt. Die Rollen 403a und die Wellen 403b sind so angeordnet, dass die Vorrichtung 400 durch die Rollen 403a stabil auf dem Untergrund verfahrbar ist.

Das Fahrgestell 403 weist darüber hinaus noch eine Antriebsrolle 403c auf (bevorzugt zwei Antriebsrollen), die auf einer Antriebswelle 403d befestigt ist. Die Antriebswelle 403d verläuft auf der einen Seite des Hebelementes 401 durch dessen Seitenwand 401b und ist an ihrem äußeren Ende mit einem vorzugsweise batteriebetriebenen Motor gekoppelt.

Der Motor ist in einem Gehäuse 407 untergebracht. Auf der Oberseite des Gehäuses 407 ist die Batterie 408 für den Motor angeordnet und befestigt.

Alternativ kann der Motor auch über eine Kabelverbindung mit elektrischer Energie versorgt werden.

Weiterhin alternativ kann es sich bei dem Motor auch um einen Verbrennungsmotor handeln, beispielsweise einen gasbetriebenen Verbrennungsmotor, der an der gleichen Gasversorgung wie die weiter unten erläuterte Brennereinrichtung angeschlossen ist.

Weiterhin alternativ kann der Motor auch in der noch zu erläuternden Anpressrolle 402 integriert sein, über die dann die gesamte Vorrichtung 400 angetrieben werden kann. Diese Art des Antriebes ist insbesondere dahingehend vorteilhaft, dass die Vorrichtung 400 sehr gleichmäßig angetrieben werden kann.

Durch diesen Motorantrieb kann die Vorrichtung 400 mit einer bevorzugten Geschwindigkeit verfahren werden, derart, dass ein optimales Verschweißergebnis erzielt wird. Die Geschwindigkeit kann in Abhängigkeit von der Art der zu verschweißenden Bitumenbahn bzw. äußeren Einflüssen, wie z.B. die Außentemperatur, stufenweise oder stufenlos variiert werden. Die im Rahmen der vorhergehenden Beispiele gemachten Ausführungen hinsichtlich der Regelung/Steuerung der Antriebsgeschwindigkeit gelten für diese Vorrichtung ebenfalls.

Wenn die Vorrichtung über den Motor angetrieben wird, berührt die Antriebsrolle 403c den Untergrund und ist hierdurch in der Lage die Vorrichtung 400 anzutreiben.

Die Vorrichtung 400 kann zwischen dem Motorbetrieb und einem manuellen Betrieb, in dem eine Person die Vorrichtung schieben muss, umgeschaltet werden. Hierfür ist eine der beiden Wellen 403b (in Fig. 10 die obere) in ihrem Höhenniveau (Z-Richtung) derart versetzbar, dass die Antriebsrolle 403c den Kontakt zu dem Untergrund 9 verliert. Dies wird dadurch erreicht, dass die entsprechende Welle 403b mit ihren Enden an einer drehbaren Scheibe 403e exzentrisch befestigt ist.

Wie in Fig. 9 gezeigt, ist an dem Hebeelemente 401 ein Hebel 403f vorgesehen. Über diesen Hebel 403f kann die Scheibe 403e gedreht werden, wodurch die exzentrisch befestigte Welle 403b in ihrem Höhenniveau (Z-Richtung) verstellt wird.

Wenn sich der Hebel 403f in der in Fig. 9 gezeigten Stellung befindet, sind die Rollen 403a so angeordnet, dass die Antriebsrolle 403c keinen Kontakt zum Untergrund 9 hat, ergo die Vorrichtung 400 sich in dem manuellen Betrieb befindet.

Wird hingegen der Hebel 403f umgelegt, kommt die Antriebsrolle 403c zusätzlich zu den Rollen 403a in Kontakt mit dem Untergrund, wodurch die Vorrichtung 400 sich in dem Motorbetrieb befindet und über die Antriebsrolle 403c angetrieben bzw. verfahren wird.

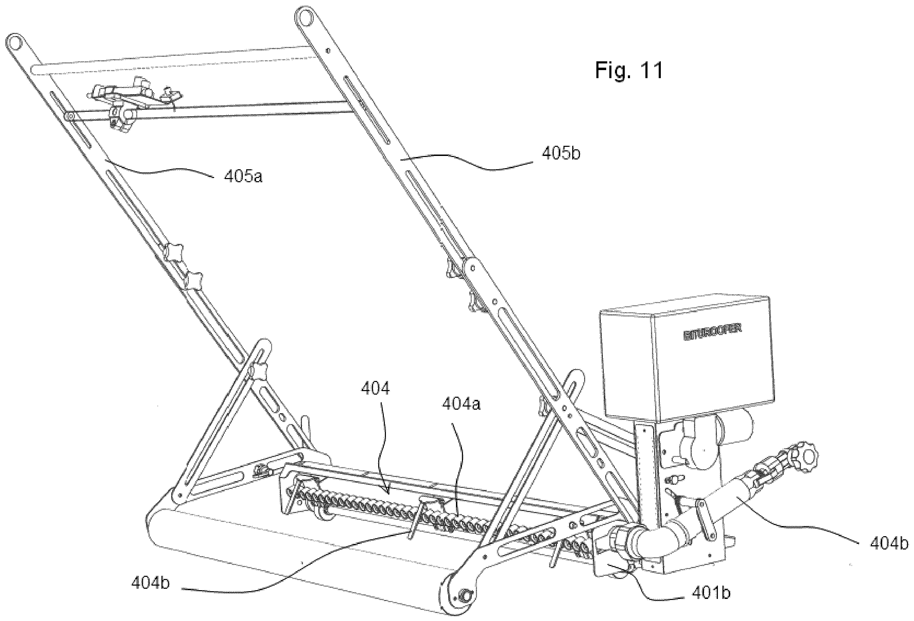

Wie insbesondere in den Fig. 10 und 11 gut erkennbar ist, weist die Vorrichtung 400 eine Brennereinrichtung 404 auf, die in Breitenrichtung (Y-Richtung) der Vorrichtung 400 verläuft. Die Brennereinrichtung 404 weist eine Vielzahl von in der Breitenrichtung angeordneten Brennersegmenten 404a auf.

Vorzugsweise ist die Brennereinrichtung unterhalb des Hebeelementes angeordnet.

In diesem Beispiel ist die Brennereinrichtung 404 als Flammenbrenner aufgebaut, wobei die Brennersegmente 404a jeweils eine Flamme ausstoßen können.

Die erzeugten Flammen wirken, wie im Folgenden erläutert, direkt auf die Unterseite der zu verschweißenden Bitumenbahn bzw. auf den Untergrund oder auf eine bereits vorhandene, verlegte Bitumenbahn.

Allgemein können die Brennersegmente variabel ausgerichtet werden, so dass einzelne Bereiche mehr oder weniger erhitzt werden.

Da die Brennsegmente 404a die Unterseite der Bitumenbahn direkt/unmittelbar und nicht mittelbar erhitzen, wird vermieden, dass sich Teile der Rampe 401a so stark erhitzen, dass bei einem Anhalten der Vorrichtung 400 während eines Verschweißvorganges die Gefahr besteht, dass die Bitumenbahn in diesem Bereich beschädigt wird. Die Brenneinrichtung braucht bei einem Anhalten der Vorrichtung lediglich abgeschaltet oder, wie weiter unten erläutert, gesteuert werden.

Der Flammenbrenner 404 wird bevorzugt mit einer Mischung aus Brenngas und Sauerstoff, beispielsweise Propangas und Sauerstoff, betrieben.

Die Brennereinrichtung 404 kann bevorzugt derart betrieben werden, dass entweder alle oder nur eine Untergruppe der Brennersegmente 404a eine Flamme ausstoßen.

Wenn beispielsweise beabsichtigt ist, Randbereiche der Bitumenbahn nicht zu verschweißen, werden entsprechende Brennersegmente 404a nicht betrieben, wodurch die Unterseite der Bitumenbahn in den betreffenden Bereichen nicht mit Hitze beaufschlagt wird.

Außerdem können hierdurch Bitumenbahnen mit unterschiedlichen Abmaßen in der Querrichtung verarbeitet werden.

Die Brennersegmente 404a sind bevorzugt in der Breitenrichtung der Vorrichtung in solchen Abständen angeordnet, dass die zu verschweißenden Bereiche der Bitumenbahn gleichmäßig erhitzt werden. In Abhängigkeit von der Leistung der Brennersegmente 404a können die Abstände und die Anzahl der Brennersegmente 404a variieren.

Auf Grund der in Breitenrichtung angeordneten Brennersegmente 404a und der hieraus resultierenden gleichmäßigen und gezielten direkten Erhitzung der Bitumenbahn kann mit der Vorrichtung ein Gasverbrauch von unter 4 kg pro Stunde erreicht werden.

Wenn beabsichtigt ist, die Bitumenbahn vollflächig zu verschweißen, wird die Brennereinrichtung 404 bzw. die Brennersegmente 404a derart betrieben, dass die Bitumenbahn in ihrer Querrichtung vollständig erwärmt bzw. erhitzt wird. Die Brennersegmente 404a sorgen hierbei für eine gleichmäßige Erhitzung der Bitumenbahn, wodurch sie gleichmäßig und ohne Lufteinschlüsse mit dem Untergrund verschweißt werden kann.

Wie in Fig. 10 und 11 gezeigt, weist die Brennereinrichtung 404 einen Gasanschluss 404b zum Anschluss einer Gasversorgung, vorzugsweise einer Gasflasche, auf. Über den Gasanschluss 404b wird das Gas zu den einzelnen Brennersegmenten 404a geleitet.

Während eines Verschweißvorganges einer Bitumenbahn bilden die die Rampe 401a verlassenden Längsabschnitte der Bitumenbahn zusammen mit dem Hebeelement 401 einen lediglich seitlich geöffneten Raum aus, in den insbesondere dann, wenn bei der Vorrichtung 400 noch Windschutzbleche zum Schutz der Flammen vorgesehen sind, unter Umständen nicht ausreichend Sauerstoff gelangen kann. Zur Unterstützung der Flammenbildung kann aus diesem Grund an dem Gasanschluss 404b ein zusätzlicher Sauerstoffanschluss ausgebildet sein, über den zusätzlich Sauerstoff zu den Brennersegmenten 404a geleitet werden kann. Hierdurch wird das Risiko, dass Flammen ersticken, verringert.

Wie in den Fig. 9 bis 11 gezeigt ist, weist die Vorrichtung 400 eine Anpressrolle 402 auf, die zum Anpressen einer durch den Flammenbrenner 404 erwärmten bzw. aufgeschmolzenen Bitumenbahn an den Untergrund vorgesehen ist.

Bei bestimmungsgemäßer Verwendung der Vorrichtung 400 wird die Bitumenbahn durch das Hebeelement 401 angehoben und gelangt anschließend nach Verlassen der Rampe 401a unter die Anpressrolle 402, über die die Bitumenbahn auf den Untergrund gedrückt wird.

Zwischen der Anpressrolle 402 und dem Hebeelement 401 beaufschlagt die Brennereinrichtung 404 bzw. der Flammenbrenner die Unterseite des Längsabschnittes der Bitumenbahn direkt mit Hitze, wodurch diese für den Verschweißvorgang aufgeschmolzen wird.

Vorzugsweise werden die Flammen von den Brennersegmenten 404a derart ausgestoßen, dass sie in den Bereich zwischen Anpressrolle und Untergrund gerichtet sind. Hierdurch wird die Bitumenbahn direkt vor bzw. unter der Anpressrolle 402 aufgeschmolzen. Dies hat insbesondere den Vorteil, dass auch die Endbereiche der Bitumenbahn mit der Vorrichtung 400 verschweißt werden kann.

Die Anpressrolle 402 kann beispielsweise hohl ausgebildet und zur Erhöhung der Anpresskraft mit Wasser gefüllt werden. Dies hat den Vorteil, dass das Gewicht der Gesamtvorrichtung für den Transport verringert werden kann.

Die Anpressrolle 402 kann bevorzugt bei der Vorrichtung 400 über die im Folgenden dargestellte Lenkeinrichtung angehoben und abgesenkt werden. Wie im Folgenden noch erläutert werden wird, hat dies insbesondere den Vorteil, dass der Verschweißvorgang an Dachkanten oder Dachaufbauten begonnen werden kann.

Im Folgenden wird eine Lenkeinrichtung 405, über die ein Anwender die Vorrichtung 400 bei einem bestimmungsgemäßen Verschweißvorgang einer Bitumenbahn lenken bzw. führen bzw. steuern kann, erläutert.

Die Lenkeinrichtung 405 umfasst Schieneneinrichtungen 405a, 405b, die jeweils an den Seitenabschnitten 401b des Hebeelementes 401 drehbar befestigt sind und sich derart erstrecken, dass die Vorrichtung 400 durch einen Anwender gelenkt werden kann.

An dem oberen Enden der Schieneneinrichtungen 405a, 405b ist zwischen ihnen eine Griffstrebe 405c vorgesehen, die ein Anwender greifen kann. Die Schieneneinrichtungen 405a und 405b weisen jeweils zwei Schienen auf, die über einen Verstellmechanismus 405f miteinander verbunden sind.

Zum einen kann durch Lösen bzw. Lockern der Verstellmechanismen 405f die Schieneneinrichtungen 405a, 405b jeweils verkürzt bzw. verlängert werden, wodurch die gesamte Lenkeinrichtung 405 an eine Körpergröße eines Anwenders angepasst werden kann.

Zum anderen kann die Lenkeinrichtung 405 über die Verstellmechanismen so ausgerichtet werden, dass die Griffstrebe 405c auf der ersten Seite 401b des Hebeelementes 401 für den Anwender greifbar ist.

Hierfür werden die Verstellmechanismen 405f bestätigt bzw. die Verbindung der Schienen in dem Mittelbereich 405d gelockert, wodurch die die Griffstrebe 405c halternden Schienen um den Mittelabschnitt 405d derart gedreht werden können, dass der Anwender die Griffstrebe 405c auf der anderen Seite der Vorrichtung greifen kann. Diese Verstellmöglichkeit der Lenkeinrichtung 405 hat, wie im Folgenden noch erläutert werden wird, insbesondere Vorteile bei der Verschweißung von Bitumenbahnen an Dachkanten oder Dachaufbauten.

Die Lenkeinrichtung 405 umfasst zusätzliche, geschlitzte Schienen 405e, die den die Anpressrolle 402 halternden Rahmen mit den Schieneneinrichtungen 405a, 405b verbinden. Diese Anordnung der zusätzlichen Schienen 405e ermöglicht es dem Anwender, den Anpressdruck der Anpressrolle 402 auf die Bitumenbahn zu erhöhen.

Die Lenkeinrichtung 405 kann bevorzugt noch eine Sicherheitsstrebe 405g aufweisen, die ein Umfallen der Lenkeinrichtung 405 bei Verdrehung um die Befestigungsabschnitte an dem Hebeelement 401 verhindert.

An der Lenkeinrichtung 405 kann bevorzugt noch eine Steuerung vorgesehen sein, über die die Gaszufuhr zu der Brenneinrichtung 404 gesteuert und damit die Größe und Stärke der Flamme geändert werden kann.

Bevorzugt ist die Griffstrebe 405c als Sicherheitsgriff ausgebildet, der dafür sorgt, dass bei Loslassen der Griffstrebe 405c die Gaszufuhr der Brennereinrichtung unterbrochen bzw. minimiert und/oder in dem Motorbetrieb die Vorrichtung 400 angehalten wird.

Außerdem kann für den Motorbetrieb noch eine Sicherung vorgesehen sein, die bei zu höher Zugbelastung der Gasleitung den Motor abschaltet.

Der Aufbau der Vorrichtung 400 ist insgesamt auch dahingehend vorteilhaft, dass die Vorrichtung 400 so dimensioniert werden kann, dass ihr Gesamtgewicht unter 60kg liegt. Die Vorrichtung kann folglich auch ohne Kran auf ein Gebäudedach mitgenommen werden.

Im Folgenden wird noch der Betrieb der Vorrichtung 400 erläutert.

Vor Verschweißung der Bitumenbahn mit dem Untergrund, wird diese ausgerollt und entsprechend ausgerichtet.

Anschließend wird das Kopfende, d.h. das in Längsrichtung liegende Ende der Bitumenbahn angehoben und über das Hebeelement 401 bzw. die Rampe 401a derart gelegt, dass es an der Anpressrolle 402 anliegt und die Flammen des Flammenbrenners 404 die Kante des Kopfendes erhitzen und aufschmelzen können.

In diesem Zustand positioniert sich der Anwender an der Lenkeinrichtung 405. Dort kann der Anwender die Steuerung für die Gaszufuhr des Flammenbrenners für den Beginn des Verschweißvorgangs betätigen. Anschließend wird die Vorrichtung 400 in die in den Fig. gezeigte X-Richtung verfahren, entweder in dem vorher erwähnten manuellen Betrieb oder motorbetrieben.

Hierdurch wird die Kante des Kopfendes der Bitumenbahn unter die Anpressrolle 402 geführt und die Unterseite der Bitumenbahn auf den Untergrund 9 gepresst.

Zur Erhöhung des Anpressdruckes kann, wie vorher erläutert, der Anwender die Lenkeinrichtung 405 mit dem eigenen Köpergewicht belasten.

Wie aus dem Vorhergehenden deutlich wird, kann mit der Vorrichtung 400 auch der Anfangsbereich der Bitumenbahn mit dem Untergrund verschweißt werden, da der Flammenbrenner direkt auf die Kante des Kopfendes wirken kann.

Außerdem ist bei der Vorrichtung 400 vorteilhaft, dass die Rollen 403a und die Antriebsrolle 403c unterhalb des Hebeelementes 401 angeordnet sind. Der Anwender muss die Bitumenbahn lediglich über das Hebeelement 401 heben und an die Anpressrolle 402 anlegen. Die Vorrichtung 400 kann folglich schnell und einfach in Betrieb genommen werden. Ein mühsames Verfahren der Vorrichtung, um die Bitumenbahn beispielsweise unter die Rollen des Fahrgestells zu gekommen, ist nicht notwendig.

Wenn mit der Vorrichtung 400 eine Bitumenbahn verschweißt und das Ende der Bitumenbahn erreicht wird, läuft das Ende der Bitumenbahn über die Rampe 401a, wobei das in Längsrichtung weisende Ende der Bitumenbahn am Ende der Rampe über Abstandshalter 404b in einem bestimmten Abstand zu dem Flammenbrenner 404 gehalten wird. Hierdurch wird die gesamte Bitumenbahn bis zu ihrem Ende erhitzt und kann mittels der Anpressrolle 402 auf den Untergrund gepresst werden. Die Abstandshalter sorgen außerdem dafür, dass das Ende der Bitumenbahn nicht zu nah an den Flammenbrenner 404 herangeführt und unter Umständen beschädigt wird.

Wenn eine weitere Bitumenbahn mit dem bereits verschweißten Kopfende einer Bitumenbahn verbunden werden soll, wird der vorherige erläuterte Ablauf wiederholt. Die sich anschließende Bitumenbahn wird über das Hebeelement 401 gehoben und an die Anpressrolle 402 angelegt. Wenn der Verschweißvorgang begonnen wird, läuft das Ende der zu verschweißenden Bitumenbahn unter die Anpressrolle 402 und wird mit der darunter liegenden, bereits verlegten Bitumenbahn verschweißt.

Wenn die Brennsegmente so ausgerichtet sind, dass sie in den Bereich zwischen Untergrund und Anpressrolle 402 gerichtet sind, werden die Oberseite der bereits verschweißten Bitumenbahn und die Unterseite der zu verschweißenden Bitumenbahn gleichzeitig erhitzt und aufgeschmolzen. Dies sorgt für eine gleichmäßig und gute Verschweißung der aneinanderliegenden Kopfenden der Bitumenbahnen.

Mit der Vorrichtung 400 lassen sich somit auch leicht die Kopfenden der Bitumenbahnen miteinander verbinden. Es ist nicht notwendig, diese Kopfabschnitte bereits vorher mittels eines Handbrenners miteinander zu verschweißen.

Wenn der Verschweißvorgang an einer Dachkante oder Dachaufbauten begonnen werden soll, stellt sich der Ablauf wie folgt dar. Die Lenkeinrichtung 405 wird über die Verstellmechanismen 405f derart verstellt, dass die Griffstrebe 405c auf der ersten Seite 401b des Hebeelementes 401 für den Anwender greifbar ist.

Anschließend wird die Anpressrolle 402 angehoben und eine zu verschweißende, ausgerichtete Bitumenbahn über das Hebeelement 401 bzw. die Rampe 401a gelegt und an der Dachkante oder Dachaufbauten so ausgerichtet, dass die Unterseite/Kante des in Längsrichtung weisenden Endes der Bitumenbahn durch die Flammen des Flammenbrenners 404 erreichbar ist. Anschließend steuert der Anwender den Flammenbrenner 404 über die an der Griffstrebe 405c angeordnete Steuerung derart, dass der Flammenbrenner die Unterseite/Kante der Bitumenbahn mit Hitze beaufschlagt. In diesem Zustand wird die Anpressrolle 402 abgesenkt, vorzugsweise durch Verdrehen der Lenkeinrichtung 405 um ihre Befestigungsabschnitte an dem Hebeelement 401, wodurch sie das Ende der Bitumenbahn, das durch den Brenner mit Hitze beaufschlagt wird, beispielsweise an der Dachkante festdrückt.

Für die weitere Verschweißung der Bitumenbahn wird die Vorrichtung 400 sodann in der bestimmungsgemäßen Bewegungsrichtung verfahren, indem der Anwender beispielsweise eine gewisse Zeit rückwärts geht. Wenn die Bitumenbahn über einen gewissen Bereich verschweißt ist, wird die Lenkeinrichtung 405 in ihre ursprüngliche Position zurückverstellt, wodurch der Anwender die Vorrichtung wieder von der gegenüber liegenden Seite aus bedienen bzw. lenken kann.

In dem Fall, dass der Anwender wünscht, den Verschweißvorgang zu unterbrechen und die Vorrichtung 400 anzuhalten, ist es lediglich notwendig, die Brennereinrichtung zur Minimierung der Flammen zu steuern. Anschließend besteht nicht die Gefahr, dass Teile der Bitumenbahn verbrennen können.

Bei einem erfindungsgemäßen Verfahren zum Verschweißen einer auf einem Untergrund 9 ausgerollten Bitumenbahn 8, welches unter Verwendung der mit Bezug auf die Fig. 6 und 7 beschriebenen Vorrichtung 300 durchgeführt wird, werden sukzessive jeweilige Längsabschnitte der Bitumenbahn, die sich über im Wesentlichen die gesamte Breite der Bitumenbahn erstrecken, vorübergehend angehoben. Das Anheben der Längsabschnitte erfolgt unter Verwendung des Hebeelements 304, welches entlang einer Längsrichtung X der Bitumenbahn bewegt wird und eine Rampe 304a aufweist, auf der die Längsabschnitte entlang gleiten.

Die Unterseite 80 der sukzessive angehobenen Längsabschnitte wird nach Verlassen des Hebeelements mittels der Brennereinrichtung 305a erwärmt und zum Schmelzen gebracht. Gleichzeitig kann auch ein Abschnitt des Untergrunds 9, mit dem die zuvor angehobenen Längsabschnitte der Bitumenbahn verschmolzen werden sollen, mittels der Brennereinrichtung 305b erwärmt werden.

Nachdem die vorübergehend angehobenen Längsabschnitte der Bitumenbahn wieder in Kontakt mit dem Untergrund gebracht wurden, wird mittels einer Anpressrolle 303 eine Kraft auf die Oberseite 81 der Längsabschnitte der Bitumenbahn ausgeübt, um diese vollflächig und homogen mit dem Untergrund 9 zu verschweißen. Hierzu wird die Kraft insbesondere entlang der gesamten Breite der Bitumenbahn auf die Oberseite 81 ausgeübt.

Bei dem erfindungsgemäßen Verfahren muss im Unterschied zu einem Verfahren, bei dem das bekannte Aufschweißverlegegerät verwendet wird, die bereits ausgerollte und ausgerichtete Bitumenbahn vor dem Verschweißen nicht erneut aufgerollt und auf den Walzenkern aufgesteckt werden. Daher kann unter Verwendung des erfindungsgemäßen Verfahrens vorteilhaft die Bitumenbahn schneller mit dem Untergrund verschweißt werden.

Im Gegensatz zu dem herkömmlichen Verfahren kann die zum Aufschmelzen der Unterseite der Bitumenbahn und zum Erwärmen des Untergrunds erforderliche Energie nicht nach oben entweichen, wodurch der Energieverbrauch erheblich reduziert werden kann.

## Patentansprüche

1. Vorrichtung (300) zum vorzugsweise vollflächigen Verschweißen einer auf einem Untergrund (9) ausgerollten Bitumenbahn (8), umfassend
ein in Längsrichtung (X) der Bitumenbahn (8) bewegbares Hebeelement (304) mit einer Rampe zum sukzessiven Anheben von Längsabschnitten der Bitumenbahn (8) über im Wesentlichen ihre gesamte Breite, wobei die Rampe ausgehend von einer bei bestimmungsgemäßem Gebrauch in Bewegungsrichtung weisenden Seite des Hebeelementes ansteigt; und
mindestens einer Anpressrolle (303) zum Anpressen der aufgeschmolzenen Längsabschnitte der Bitumenbahn (8) auf den Untergrund (9);
**dadurch gekennzeichnet, dass** die Vorrichtung weiterhin umfasst eine Aufnahmewalze (320), die beabstandet vom Untergrund (9) zwischen dem Hebeelement (304) und der Anpressrolle (303) vorgesehen ist und auf der die das Hebeelement (304) verlassenden Längsabschnitte der Bitumenbahn (8) aufgenommen werden können; und
eine Brennereinrichtung, die in Form eines Infrarotstrahlers (305a, 305b) ausgebildet ist, wobei der Infrarotstrahler (305a, 305b) unterhalb der Aufnahmewalze (320) und zwischen dem Hebeelement (304) und der Anpressrolle (303) vorgesehen ist und zum Erwärmen des Untergrunds (9) bzw. zum Aufschmelzen der Unterseite (80) der Bitumenbahn (8) über im Wesentlichen ihre gesamte Breite eingerichtet ist.

2. Vorrichtung nach Anspruch 1, ferner umfassend einen Motor (311), der die Anpressrolle (303) antreibt.

3. Vorrichtung nach einem der Ansprüche 1 bis 2, bei der die Brennereinrichtung (305a, 305b) mehrere Brennsegmente umfasst, welche entlang einer Querrichtung (Y) der Vorrichtung beabstandet angeordnet sind.

4. Vorrichtung gemäß einem der vorhergehenden Ansprüche, wobei die Brennereinrichtung (305a, 305b) an der Führungseinrichtung derart steuerbar ist, dass das Beaufschlagen der die Rampe verlassenden Längsabschnitte mit Wärme erhöht oder verringert werden kann.

5. Verfahren zum Verschweißen eines Anfangsbereiches einer auf einem Untergrund (9) ausgerollten Bitumenbahn (8) über im Wesentlichen die gesamte Breite der Bitumenbahn (8) mittels einer Vorrichtung nach einem der vorhergehenden Ansprüche 1 bis 4, umfassend:
Anheben des Anfangsbereiches über im Wesentlichen die gesamte Breite der Bitumenbahn (8),
Aufschmelzen einer Unterseite des angehobenen Anfangsbereiches über im Wesentlichen die gesamte Breite der Bitumenbahn (8), und
Anpressen des aufgeschmolzenen Anfangsbereichs auf den Untergrund (9) durch Absenken einer Anpressrolle.

## Claims

1. A device (300) for welding a bitumen membrane (8), preferably over the whole area thereof, said bitumen membrane being rolled out on a base (9), comprising
a lifting element (304), which can be moved in the longitudinal direction (X) of the bitumen membrane (8) and has a ramp for successively lifting longitudinal sections of the bitumen membrane (8) over substantially the entire width thereof, the ramp rising starting from a side of the lifting element that faces in the direction of movement during use as intended; and
at least one pressure roll (303) for pressing the melted longitudinal sections of the bitumen membrane (8) onto the base (9);
**characterised in that** the device further comprises a holding roller (320), which is provided at a distance from the base (9) between the lifting element (304) and the pressure roll (303) and on which the longitudinal sections of the bitumen membrane (8) leaving the lifting element (304) can be held; and
a burner device, which is in the form of an infra-red emitter (305a, 305b), wherein the infra-red emitter (305a, 305b) is provided under the holding roller (320) and between the lifting element (304) and the pressure roll (303) and is designed to heat the base (9) and to melt the underside (80) of the bitumen membrane (8) over substantially the entire width thereof.

2. The device according to claim 1, further comprising a motor (311), which drives the pressure roll (303).

3. The device according to one of claims 1 or 2, in which the burner device (305a, 305b) comprises a plurality of burning segments, which are arranged spaced apart along a transverse direction (Y) of the device.

4. The device according to any one of the preceding claims, wherein the burner device (305a, 305b) on the guiding device can be controlled in such a manner that the amount of heat applied to the longitudinal sections leaving the ramp can be increased or decreased.

5. A method for welding a starting region of a bitumen membrane (8) rolled out on a base (9) over substantially the entire width of the bitumen membrane (8) by means of a device according to any one of the preceding claims 1 to 4, comprising:
lifting the starting region over substantially the entire width of the bitumen membrane (8),
melting an underside of the lifted starting region over substantially the entire width of the bitumen membrane (8), and
pressing the melted starting region onto the base (9) by lowering a pressure roll.

## Revendications

1. Dispositif (300) servant à souder de préférence sur toute la surface une bande de bitume (8) déroulée sur un support (9), comprenant
un élément de levage (304) pouvant être déplacé dans un sens longitudinal (X) de la bande de bitume (8), pourvu d'une rampe servant à soulever de manière successive des portions longitudinales de la bande de bitume (8) sur sensiblement toute sa largeur, dans lequel la rampe est ascendante en partant d'un côté, pointant dans le sens de déplacement lors d'une utilisation conforme à l'usage prévu, de l'élément de levage ; et
au moins un rouleau de compression (303) servant à comprimer les portions longitudinales fondues de la bande de bitume (8) sur le support (9) ;
**caractérisé en ce que** le dispositif comprend par ailleurs un cylindre de logement (320), qui est prévu, à distance du support (9), entre l'élément de levage (304) et le rouleau de compression (303) et sur lequel les portions longitudinales, quittant l'élément de levage (304), de la bande de bitume (8) peuvent être logées ; et
un système brûleur, qui est réalisé sous la forme d'un radiateur à infrarouge (305a, 305b), dans lequel le radiateur à infrarouge (305a, 305b) est prévu sous le cylindre de logement (320) et entre l'élément de levage (304) et le rouleau de compression (303) et est configuré afin de chauffer le support (9) ou afin de faire fondre le côté inférieur (80) de la bande de bitume (8) sur sensiblement toute sa largeur.

2. Dispositif selon la revendication 1, comprenant en outre un moteur (311), qui entraîne le rouleau de compression (303).

3. Dispositif selon l'une quelconque des revendications 1 à 2, dans le cadre duquel le système brûleur (305a, 305b) comprend plusieurs segments de combustion, qui sont disposés à distance le long d'un sens transversal (Y) du dispositif .

4. Dispositif selon l'une quelconque des revendications précédentes, dans lequel le système brûleur (305a, 305b) peut être commandé au niveau du système de guidage de telle manière que l'effet exercé par la chaleur sur les portions longitudinales quittant la rampe peut être augmenté ou réduit.

5. Procédé servant à souder une zone de début d'une bande de bitume (8) déroulée sur un support (9) sur sensiblement toute la largeur de la bande de bitume (8) au moyen d'un dispositif selon l'une quelconque des revendications précédentes 1 à 4, comprenant les étapes suivantes :
le soulèvement de la zone de début sur sensiblement toute la largeur de la bande de bitume (8),
la fusion d'un côté inférieur de la zone de début soulevée sur sensiblement toute la largeur de la bande de bitume (8), et
la compression de la zone de début fondue sur le support (9) en abaissant un rouleau de compression.
